# EUROPEAN PATENT SPECIFICATION

(11) **EP 3 859 529 B1**
(45) Date of publication and mention of the grant of the patent: **03.05.2023**
(21) Application number: 21164319.2
(22) Date of filing: 23.03.2021
(51) Int. Cl.: G06F 11/14

(54) **BACKUP MANAGEMENT METHOD AND SYSTEM, ELECTRONIC DEVICE AND MEDIUM**
VERFAHREN UND SYSTEM ZUR BACKUP-VERWALTUNG, ELEKTRONISCHE VORRICHTUNG UND MEDIUM
PROCÉDÉ ET SYSTÈME DE GESTION DE SAUVEGARDE, DISPOSITIF ÉLECTRONIQUE ET SUPPORT

(30) Priority: 20.07.2020 CN 202010700953
(43) Date of publication of application: 04.08.2021
(73) Proprietor: BEIJING BAIDU NETCOM SCIENCE AND TECHNOLOGY CO., LTD., Beijing, 100085 (CN)
(72) Inventor: GUAN, Yu, BEIJING, 100085 (CN)
(74) Representative: Laqua, Bernd Christian Kurt

(56) References cited:
- US-A1- 2013 339 298
- US-A1- 2018 060 176
- US-B1- 10 042 719

## Description

### TECHNICAL FIELD

The present disclosure relates to the field of computer technologies, and more particular, to the field of cloud computing and cloud platforms.

### BACKGROUND

With the development of computer technology, data backup technology has made great progress, making contributions to ensuring the reliability and availability of production data in computer systems. However, in the current data backup technologies and solutions, the backup of a large amount of data has become a technical difficulty.

For the backup of a large amount of data, taking the built-ins commands such as secure copy (scp) and remote synchronize (rsync) of the Linux system as an example, the data in the machine to be backed up is periodically backed up to the corresponding machine or the designated medium. When there are multiple data sources that need to be backed up, tasks will be started uniformly through a scheduled task, so as to back up the data to the designated machine.

However, by using the above remote copy command for scheduled backup, problems such as capacity bottleneck, low writing speed, and complicated management will occur.

US 2013/0339298 A1 describes a storage system according to certain embodiments including a client-side signature repository that includes information representative of a set of data blocks stored in primary storage.

US 2018/0060176 A1 describes a method for backing up workloads for multiple tenants of a cloud computing system.

US 10,042,719 B1 describes embodiments which use a file server implementing a network file sharing protocol in an improved backup workflow in a storage system.

### SUMMARY

The present invention is defined in the appended independent claims. Particular embodiments are set out in the appended dependent claims.

According to an aspect of the present disclosure, a backup management method is provided. The backup management method includes: receiving a backup protocol entered by a user; generating a backup task based on the backup protocol; and sending the backup task to a backup client provided on the backup target machine so as to cause the backup client to execute the backup task. The backup protocol includes information of a backup target machine and information of a backup medium, the backup target machine corresponds to a machine where source data of data to be backed up is located, and the backup medium corresponds to a dynamically expandable storage system. The backup protocol further comprises a backup data path, a backup matching rule and a backup cycle, and wherein the backup data path corresponds to a location of the source data on the backup target machine, the backup matching rule corresponds to a regular expression for screening the source data to generate the data to be backed up, and the backup cycle corresponds to a frequency at which the backup task is executed, wherein said regular expression describes a pattern for string matching.

According to another aspect of the present disclosure, a backup management system is provided. The backup management system includes: a backup management module, configured to manage a backup protocol entered by a user; and a backup scheduling module, configured to schedule a backup task. The backup protocol includes information of a backup target machine and information of a backup medium, the backup target machine corresponds to a machine where source data of data to be backed up is located, and the backup medium corresponds to a dynamically expandable storage system. The backup protocol further comprises a backup data path, a backup matching rule and a backup cycle, and wherein the backup data path corresponds to a location of the source data on the backup target machine, the backup matching rule corresponds to a regular expression for screening the source data to generate the data to be backed up, and the backup cycle corresponds to a frequency at which the backup task is executed, wherein said regular expression describes a pattern for string matching.

Scheduling the backup task includes:
generating the backup task based on the backup protocol, and sending the backup task to a backup client provided on the backup target machine so as to cause the backup client to execute the backup task.

According to another aspect of the present disclosure, an electronic device is provided, which includes: a processor; and a memory storing a program. The program including instructions that, when executed by the processor, cause the processor to execute the method according to the present disclosure.

According to another aspect of the present disclosure, a computer program product is provided, where the computer program product includes a program code portion for carrying out the method according to the present disclosure when the computer program product is run on one or more computing devices. The computer program product can be stored on a computer readable storage medium.

The backup management method and system, the electronic device and the medium according to the present disclosure can improve the capacity of backing up large-scale data.

### BRIEF DESCRIPTION OF THE DRAWINGS

The drawings, which exemplarily illustrate embodiments and constitute a part of the specification, together with the text description of the specification, serve to explain exemplary implementations of the embodiments. The illustrated embodiments are for illustrative purposes only and do not limit the scope of the claims. Throughout the drawings, the same reference signs denote similar but not necessarily the same elements.
FIG. 1 is a flowchart illustrating a backup management method according to embodiments of the present disclosure;
FIG. 2 is a schematic diagram illustrating a backup protocol according to embodiments of the present disclosure;
FIG. 3 is a flowchart illustrating execution of a backup task according to embodiments of the present disclosure;
FIG. 4 is a block diagram illustrating a backup management system according to embodiments of the present disclosure; and
FIG. 5 is a block diagram illustrating an exemplary electronic device applicable to embodiments of the present disclosure.

### DETAILED DESCRIPTION

The present disclosure will be described in detail below with reference to the accompanying drawings. Although certain embodiments of the present disclosure are shown in the drawings, it should be understood that, the present disclosure may be implemented in various forms, and should not be construed as being limited to the embodiments set forth herein. Instead, the embodiments are provided to provide a more complete and clear understanding of the present disclosure.

It should be understood that, the drawings and embodiments of the present disclosure are for illustrative purpose only and are not intended to limit the scope of the present disclosure. It should be understood that, the steps described in the method embodiments of the present disclosure can be performed in different orders and/or in parallel. In addition, method embodiments may include additional steps and/or omit the execution of the illustrated steps. The scope of the present disclosure is not limited in this respect.

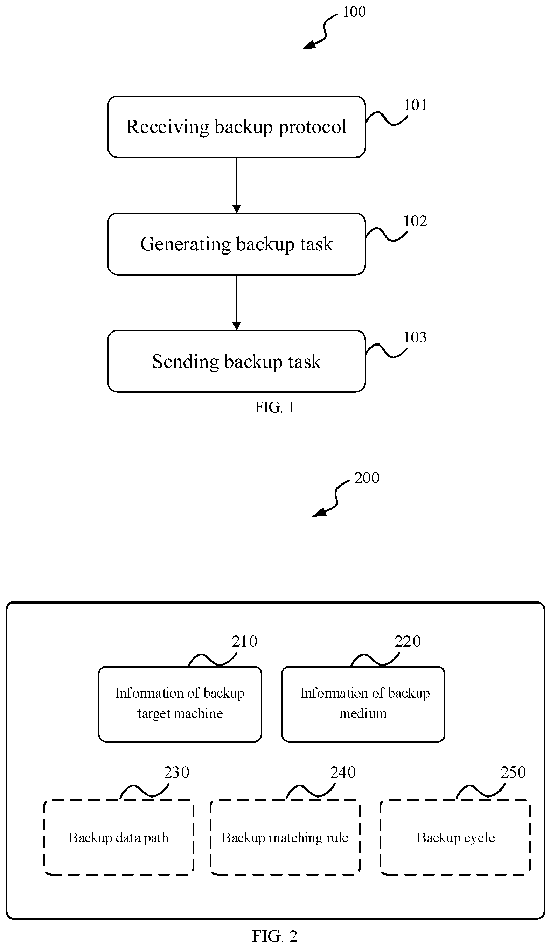

FIG. 1 is a flowchart illustrating a backup management method 100 according to embodiments of the present disclosure.

At block 101, a backup protocol entered by a user is received.

The backup protocol includes information of the backup target machine and information of the backup medium. The backup target machine corresponds to the machine where source data of data to be backed up is located, and the backup medium corresponds to a dynamically expandable storage system.

In some embodiments, the user may enter the backup protocol through a webpage. For example, the user may enter the backup protocol through a webpage on the backup target machine, or through other user interfaces. The user can enter the backup protocol in various ways, thereby increasing the flexibility of entering the backup protocol.

At block 102, a backup task is generated based on the backup protocol.

At block 103, the backup task is sent to a backup client provided on the backup target machine, to cause the backup client to execute the backup task.

Based on the backup management method 100 illustrated in FIG. 1, by managing and scheduling the backup protocol and the backup task, data is backed up to the dynamically expandable storage system, thereby avoiding the problem such as upper limit of capacity, the difficulty in dynamic expansion, and the difficulty in data recovery after backup caused when a single server or a single medium is used as the backup medium. Furthermore, based on the management and scheduling of the backup protocol and the backup task, when large-scale data is backed up, the backup data can be quickly recovered. Thereby, the backup management method according to the present disclosure can improve the capacity of backing up large-scale data and realize large-scale data backup.

FIG. 2 is a schematic diagram illustrating a backup protocol 200 according to embodiments of the present disclosure.

With reference to FIG. 2, for the block 101 of the backup management method 100 illustrated in FIG. 1, the backup protocol 200 includes information 210 of the backup target machine and information 220 of the backup medium.

The information 210 of the backup target machine corresponds to the information of the machine where the source data of the data to be backed up is located, and the information 220 of the backup medium corresponds to the information of the dynamically expandable storage system.

The backup target machine may be a digital computer in various forms, such as a laptop computer, a desktop computer, a workstation, a personal digital assistant, a server, a blade server, a mainframe computer, and other suitable computers. In other embodiments, the backup target machine may be a mobile device in various forms, such as a personal digital assistant, a cellular phone, a smart phone, a wearable device and other similar computing devices. It can be understood that, any machine that can store the source data of the data to be backed up can be used as the backup target machine in the present disclosure.

In some embodiments, the dynamically expandable storage system may be a distributed storage system. In the distributed storage system, data is stored on multiple independent devices. Moreover, the distributed storage system can adopt an expandable system structure, for example, using multiple storage servers to share the storage load, and using the location server to locate storage information. By using the storage distributed system as the backup medium, expansion can be facilitated, and the reliability, availability and access efficiency of data backup can be improved.

In some embodiments, the distributed storage system may be an HDFS (Hadoop Distributed File System) system.

When the backup protocol 200 merely includes the information 210 of the backup target machine and the information 220 of the backup medium, the machine where the source data of the data to be backed up is located can be acquired based on the information 210 of the backup target machine, and the backup destination of the source data of the data to be backed up can be acquired based on the information 220 of the backup medium, and then the backup method can be managed by continuing to perform blocks 102 and 103. However, in order to further improve the performance of the backup management method, the content included in the backup protocol 200 is not limited thereto, and other contents included in the backup protocol 200 will be described below with reference to FIG. 2.

With reference to FIG. 2, the backup protocol further includes the backup data path 230, the backup matching rule 240 and the backup cycle 250. Specifically, the backup data path 230 corresponds to the location of the source data on the information 210 of the backup target machine, the backup matching rule 240 corresponds to the rule for screening the source data to generate the data to be backed up, and the backup cycle 250 corresponds to the frequency at which the backup task is executed.

The backup data path 230 is selected as the location of the source data on the information 210 of the backup target machine. Based on the acquired information 210 of the backup target machine, the specific location of the source data of the data to be backed up on the information 210 of the backup target machine can be further confirmed through the backup data path 230, such that the specific location of the source data can be found.

The backup matching rule 240 is selected as the rule for screening the source data to generate the data to be backed up. For the case that the source data in the backup path does not need to be fully backed up, it is often necessary to screen the source data according to a certain rule, so as to select matched data to be backed up.

The backup cycle 250 is selected as the frequency at which the backup task is executed, i.e., backup frequency. By the backup frequency, it is equivalent to performing scheduled backup tasks.

For the block 102 of the backup management method 100, the backup task is generated based on the backup protocol.

The backup protocol 200 includes the information 210 of the backup target machine and the information 220 of the backup medium. The backup protocol 200 also includes the backup data path 230, the backup matching rule 240, and the backup cycle 250. Then, when the backup task is generated based on the backup protocol at block 102, the source data at the backup data path 220 of the backup target machine is screened according to the backup matching rule 240 in the backup protocol, so as to generate the data to be backed up. The backup task may include the data to be backed up and the backup medium.

A regular expression is used to screen the source data. The regular expression describes a pattern for string matching, which can be used to check whether a string includes a certain substring, replace the matching substring, or extract the substring meeting a certain condition from a string, etc.

In some embodiments, the source data at the backup data path 220 of the backup target machine may include directories, programs, configurations, and logs. According to the specific regular expression, the source data is screened as the data to be backed up, and the data to be backed up may include directories, programs and configurations, but do not include the logs.

In some embodiments, the source data at the backup data path 220 of the backup target machine may include 100 files. Based on a preset regular expression, the file directory can be screened, and a file directory can be removed. Then, according to the preset regular expression, a file can be removed from the 100 files in the source data, that is, the data to be backed up includes 99 files.

Therefore, according to the backup matching rule in the backup protocol, the data to be backed up can be obtained, and since the backup protocol includes the backup medium, the generated backup task includes the data to be backed up and the backup medium.

Based on the above description, the backup protocol includes the information of the backup target machine, the information of the backup medium, the backup data path, the backup matching rule and the backup cycle. Based on each part of the backup protocol, the backup task is generated, the management and scheduling of the backup task are realized, and the data to be backed up can be accurately acquired and backed up to the expandable backup medium in each backup cycle. Thereby, when large-scale data needs to be backed up, the backup management method according to the present disclosure can achieve easy expansion of the backup medium, improve the writing speed, and facilitate the recovery of the backup data, such that the backup capability of the system can be improved.

In some embodiments, the block 102 of generating the backup task based on the backup protocol may include generating a backup task in each backup cycle according to the backup cycle 250 in the backup protocol.

Due to the backup cycle in the backup protocol, the backup protocol is composed of multi-cycle backup tasks. By setting the backup cycle, the backup operation is performed at a certain time interval. Preferably, each backup cycle corresponds to a backup task.

In some embodiments, in each backup task, the backup of the data to be backed up from the location at the backup data path of the backup target machine to the dynamically expandable storage system indicated by the information of the backup medium is initiated.

In some embodiments, the value of the backup cycle 250 can indicate the time duration the data can be recovered. For example, when the backup cycle is one hour, it indicates that the data one hour ago can be recovered, and the backup cycle in this case is at the hour level.

In some embodiments, the backup cycle can be determined in combination with a recovery point objective (RPO). The RPO refers to the loss tolerance of the enterprise, i.e., the amount of data that may be lost before causing significant damage to business. The objective indicates the time measure from the lost event to the last previous backup. When all or most of data is incrementally backed up in the regular plan of 24 hours, and then in the worst case, the enterprise will lose data of 24 hours.

For example, when the application of the enterprise has the RPO of 4 hours, the time interval between backup and data loss will be 4 hours. Having the RPO of 4 hours does not necessarily indicates that the enterprise will lose data of 4 hours. For example, when a text processing application stops running in the middle of the night, and fails in the early morning, not much (or any) data will be lost. However, when a task-busy application stops running at 10: 00 a.m. and does not recover until 2: 00 p.m., the enterprise may lose high-value and irreplaceable data of 4 hours. In this case, more frequent backup is required to access the application-specific RPO.

The backup cycle may depend on the priority of the application, and the range of a single RPO is usually 24 hours, 12 hours, 8 hours, 4 hours, etc., and even may be close to zero when measured in seconds.

In order to make the RPO as close as possible to the current moment, a low backup cycle may be selected. It can be understood that, the shorter the backup cycle is, the lower the possibility of data loss is. However, the shortening of the backup cycle will lead to a large scale of backup data, and as the backup cycle decreases, the backup scale may increase, the problem such as expansion difficulty, slow writing speed and management difficulty can be caused. When the backup management method disclosed according to the present disclosure is used for backing up data, the easy expansion of the backup medium can be ensured, and the writing speed can be improved, and based on the backup management for the backup operation, the recovery of the backup data can be facilitated, and the backup capability of the system can be improved.

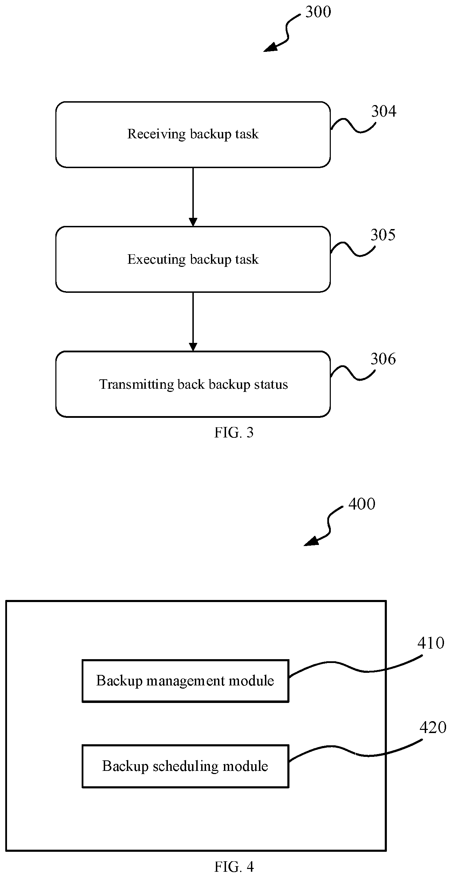

The block 103 of the backup management method 100 will be described below with reference to FIG. 3.

FIG. 3 is a flowchart illustrating execution 300 of a backup task according to embodiments of the present disclosure.

According to the block 103 of the backup management method 100, the backup task is sent to the backup client provided on the backup target machine, such that the backup client can execute the backup task.

The backup client, also known as the backup user terminal, refers to the port corresponding to the server, which provides the client with programs for local services. In addition to some applications that only run locally, the backup client is generally installed on the ordinary client, and needs to cooperate with the server.

In some embodiments, the client may include the web browser used in the World Wide Web, the email client for email transmission and reception, and the client software instant messaging, etc. For these applications, there needs to be the corresponding server and service program in the network to provide corresponding services, such as database services and e-mail services, etc., such that the specific communication connection needs to be established between the client and the server to ensure the normal operation of the application.

Specifically, the backup client can be provided on the backup target machine.

When the backup target machine includes the server as described above, the backup client can communicate with the server of the backup target machine, so as to instruct the backup target machine to perform the backup operation.

Therefore, the backup client can be located on the backup target machine or communicate with the backup target machine, to perform the backup task.

When the backup client executes the backup task, the execution process is shown in FIG. 3, which includes: receiving the backup task (block 304); executing the backup task (block 305); and transmitting back the backup status (block 306).

At block 304, the backup client receives the backup task sent at block 103.

Specifically, the backup client receives the backup task sent by the backup management system, in which the backup task is generated by blocks 101 and 102.

Exemplarily, the backup task may include the data to be backed up and the information of the backup medium.

At block 305, the backup client executes the backup task received at block 304.

In the backup management system, through the management and scheduling of the backup protocol and the backup task, the backup client can back up data to the dynamically expandable storage system, thereby avoiding the problem such as upper limit of capacity, the difficulty in dynamic expansion, and the difficulty in data recovery after backup caused when a single server or a single medium is used as the backup medium. Thereby, the backup client can back up large-scale data and improve the capacity of backing up large-scale data.

At block 306, the execution status of the backup task is transmitted back to the backup management system. The execution status of the backup task is also called the backup status. The backup status includes, for example, backup start, backup in progress or backup end.

It can be understood that, although blocks 305 and 306 are sequentially described and shown, this is only illustrative. In practice, executing the backup task and transmitting back the backup status can be executed concurrently.

The backup management system, for example, including the backup management server, may periodically receive the backup status of the backup task, and the backup status is transmitted back by the backup client.

In some embodiments, the backup management system may also store the status of the backup task in the database. Besides, the backup management system may periodically receive the backup status of the backup client and persist the backup status to the database.

In some embodiments, the backup management system may also receive the heartbeat or other communication information of the backup client, to maintain data exchange between the backup management system and the backup client.

FIG. 4 is a block diagram illustrating a backup management system 400 according to embodiments of the present disclosure. The backup management system 400 may be, for example, a part of the backup management server described above.

As illustrated in FIG. 4, the backup management system 400 may include a backup management module 410 and a backup scheduling module 420.

The backup management module 410 is configured to manage a backup protocol entered by a user. The backup protocol includes information of a backup target machine and information of a backup medium, the backup target machine corresponds to a machine where source data of data to be backed up is located, and the backup medium corresponds to a dynamically expandable storage system.

The backup scheduling module 420 is configured to schedule a backup task. Scheduling the backup task includes: generating the backup task based on the backup protocol, and sending the backup task to a backup client provided on the backup target machine so as to cause the backup client to execute the backup task.

Based on the above backup management system, by managing and scheduling the backup protocol and the backup task, the data is backed up to the dynamically expandable storage system, thereby avoiding the problem such as upper limit of capacity, the difficulty in dynamic expansion, and the difficulty in data recovery after backup caused when a single server or a single medium is used as a backup medium. Thereby, the backup management method according to the present disclosure can improve the capacity of backing up large-scale data and realize large-scale data backup.

According to the embodiments of the present disclosure, an electronic device 500 and a readable storage medium are also provided.

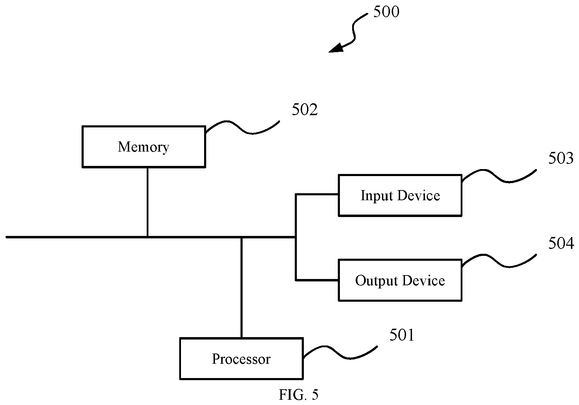

FIG. 5 is a block diagram illustrating an exemplary electronic device applicable to embodiments of the present disclosure.

The electronic device is intended to represent digital computers in various forms, such as a laptop computer, a desktop computer, a workstation, a personal digital assistant, a server, a blade server, a mainframe computer, and other suitable computers. The electronic device can also represent mobile devices in various forms, such as a personal digital assistant, a cellular phone, a smart phone, a wearable device and other similar computing devices. The components shown herein, their connections and relationships, and their functions are merely examples, and are not intended to limit the implementation of the present disclosure described and/or claimed herein.

As illustrated in FIG. 5, the electronic device 500 includes one or more processors 501, a memory 502, and the interfaces for connecting various components, including high-speed interfaces and low-speed interfaces. The various components are connected by different buses, and can be mounted on a common main board or mounted in other ways as required. The processor may process instructions executed in the electronic device (for example, instructions to display graphical information of the GUI on the display device coupled to the interface). In other embodiments, if desired, multiple processors and/or multiple buses and multiple memories may be used together with multiple memories. Similarly, multiple electronic devices can be connected, and each device provides corresponding necessary operations (for example, as a server array, a group of blade servers, or a multiprocessor system). In FIG. 5, one processor 501 is illustrated as an example.

The memory 502 is a non-transitory computer-readable storage medium according to the present disclosure. The memory stores instructions executed by at least one processor to cause the at least one processor to execute the backup management method according to the present disclosure. The non-transitory computer-readable storage medium of the present disclosure stores computer instructions for causing a computer to execute the backup management method according to the present disclosure.

As the non-transitory computer-readable storage medium, the memory 502 can be used to store non-transitory software programs, non-transitory computer executable programs and modules, such as program instructions/modules (for example, the backup management module 410 and the backup scheduling module 420 illustrated in FIG. 4) corresponding to the backup management method in the embodiments of the present disclosure. The processor 501 executes various functional applications and data processing of the server by running non-instantaneous software programs, instructions and modules stored in the memory 502, that is, realizes the backup management method in the above method embodiments.

The memory 502 may include a program storage area and a data storage area. The program storage area may store an application required by the operating system and at least one function, and the data storage area may store data and the like created according to the use of the electronic device for implementing the backup management method. In addition, the memory 502 may include a high-speed random-access memory, and may also include a non-transitory memory, such as at least one disk memory device, a flash memory device, or other non-transitory solid-state memory devices. In some embodiments, the memory 502 may optionally include memories remotely located with respect to the processor 501, and these remote memories may be connected to the electronic device for implementing the backup management method through a network. Examples of the above network include, but are not limited to, the internet, intranet, local area network, mobile communication network and combinations thereof.

The electronic device 500 for implementing the backup management method may further include an input device 503 and an output device 504. The processor 501, the memory 502, the input device 503, and the output device 504 may be connected through a bus or may be connected through other means. In FIG. 5, bus connection is taken as an example.

The input device 503 can receive input digital or character information, and generate key signal input related to user setting and function control of the electronic device for implementing the backup management method, such as touch screen, keypad, mouse, track pad, touch pad, indicator stem, one or more mouse buttons, trackball and joystick. The output device 504 may be a display device, an auxiliary lighting device (e.g., an LED), a tactile feedback device (e.g., a vibration motor), and the like. The display device may be, but is not limited to, a liquid crystal display (LCD), a light emitting diode (LED) display, and a plasma display. In some embodiments, the display device may be a touch screen.

The various embodiments of the systems and technologies described herein may be implemented in digital electronic circuit systems, integrated circuit systems, ASIC (application specific integrated circuits), computer hardware, firmware, software, and/or combinations thereof. These various embodiments may be implemented in one or more computer programs that can be executed and/or interpreted on a programmable system including at least one programmable processor, the programmable processor may be a dedicated or general programmable processor, which can receive data and instructions from a storage system, at least one input device, and at least one output device, and transmit data and instructions to the storage system, the at least one input device, and the at least one output device.

These computing programs (also called programs, software, software applications, or codes) include machine instructions of the programmable processor, and can be implemented using high-level procedures and/or object-oriented programming languages, and/or assembly/machine languages. As used herein, the terms "machine-readable medium" and "computer-readable medium" refer to any computer program product, device, and/or apparatus (e.g., magnetic disk, optical disk, memory, programmable logic device (PLD)) for providing machine instructions and/or data to the programmable processor, including machine-readable media that receive machine instructions as machine-readable signals. The term "machine-readable signal" refers to any signal used to provide machine instructions and/or data to the programmable processor.

To provide interaction with the user, the systems and technologies described herein can be implemented on a computer. The computer may include a display device (e.g., a CRT (cathode ray tube) or LCD (liquid crystal display) monitor) for displaying information to the user, and a keyboard and a pointing device (e.g., a mouse or a trackball) through which the user can provide the input to the computer. Other kinds of devices may also be used to provide interaction with the user. For example, the feedback provided to the user can be sensory feedback in any form (for example, visual feedback, auditory feedback, or tactile feedback), and the input from the user can be received in any form, including acoustic input, voice input or tactile input.

The systems and technologies described herein can be implemented in a computing system including background components (e.g., as a data server), a computing system including middleware components (e.g., an application server), a computing system including front-end components (e.g., a user computer with a graphical user interface or a web browser through which the user can interact with the implementation of the system and technologies described herein), or a computing system including any combination of such background components, middleware components, or front-end components. The components of the system can be interconnected through digital data communication in any form (e.g., a communication network) or medium. Examples of the communication network include a local area network (LAN), a wide area network (WAN), and the Internet.

A computer system may include a client and a server. The client and the server are generally away from each other, and interact through the communication network. The relationship between the client and the server is generated by running computer programs with the client-server relationship on the corresponding computers.

It should be understood that the steps in the flows in various forms shown above can be reordered, added or deleted. For example, the steps described in the present disclosure can be executed concurrently, sequentially or in a different order, so long as the desired result of the technical solution disclosed in the present disclosure can be achieved, which is not limited herein.

The above specific embodiments do not limit the protection scope of the present disclosure. It should be understood by those skilled in the art that various modifications, combinations, sub-combinations and substitutions can be made according to design requirements and other factors.

## Claims

1. A backup management method, comprising:
receiving (101) a backup protocol entered by a user, the backup protocol comprising information of a backup target machine (210) and information of a backup medium (220), the backup target machine corresponding to a machine where source data of data to be backed up is located, and the backup medium corresponding to a dynamically expandable storage system;
generating (102) a backup task based on the backup protocol; and
sending (103) the backup task to a backup client provided on the backup target machine so as to cause the backup client to execute the backup task,
wherein the backup protocol further comprises a backup data path (230), a backup matching rule (240) and a backup cycle (250), and wherein the backup data path (230) corresponds to a location of the source data on the backup target machine, the backup matching rule (240) corresponds to a regular expression for screening the source data to generate the data to be backed up, and the backup cycle (250) corresponds to a frequency at which the backup task is executed, wherein said regular expression describes a pattern for string matching.

2. The method of claim 1, wherein generating the backup task based on the backup protocol comprises:
screening source data at the backup data path (230) of the backup target machine to generate the data to be backed up according to the backup matching rule (240) in the backup protocol, wherein the backup task comprises the data to be backed up and the backup medium.

3. The method of claim 1, wherein generating the backup task based on the backup protocol comprises:
generating a backup task in each backup cycle (250) according to the backup cycle (250) in the backup protocol.

4. The method of claim 2 or 3, wherein,
in each backup task, backup of the data to be backed up from a location at the backup data path (230) of the backup target machine to the dynamically expandable storage system indicated by the information of the backup medium (220) is initiated.

5. The method of any one of claims 1-3, wherein,
the backup protocol is entered by the user through a webpage.

6. The method of any one of claims 1-3, wherein,
the dynamically expandable storage system is a distributed storage system.

7. The method of claim 1, further comprising:
receiving a backup status of the backup task periodically, wherein the backup status is transmitted back by the backup client.

8. The method of claim 7, wherein,
the backup status comprises backup start, backup in progress or backup end.

9. A backup management system, comprising:
a backup management module (410), configured to manage a backup protocol entered by a user, the backup protocol comprising information of a backup target machine (210) and information of a backup medium (220), the backup target machine corresponding to a machine where source data of data to be backed up is located, and the backup medium corresponding to a dynamically expandable storage system; and
a backup scheduling module (420), configured to schedule a backup task, wherein scheduling the backup task comprises: generating the backup task based on the backup protocol, and sending the backup task to a backup client provided on the backup target machine so as to cause the backup client to execute the backup task,
wherein the backup protocol further comprises a backup data path (230), a backup matching rule (240) and a backup cycle (250), and wherein the backup data path (230) corresponds to a location of the source data on the backup target machine, the backup matching rule (240) corresponds to a regular expression for screening the source data to generate the data to be backed up, and the backup cycle (250) corresponds to a frequency at which the backup task is executed, wherein said regular expression describes a pattern for string matching.

10. The system of claim 9, wherein the backup scheduling module (420) is further configured to:
screen source data at the backup data path (230) of the backup target machine to generate the data to be backed up according to the backup matching rule (240) in the backup protocol, wherein the backup task comprises the data to be backed up and the backup medium.

11. The system of claim 9, wherein the backup scheduling module (420) is further configured to:
generate a backup task in each backup cycle (250) according to the backup cycle (250) in the backup protocol.

12. A computing device, comprising:
a processor; and
a memory storing a program, the program comprising instructions that, when executed by the processor, cause the processor to perform the method according to any one of claims 1-8.

13. A computer program product, comprising a program code portion for carrying out the method according to any one of claims 1 to 8 when the computer program product is run on one or more computing devices.

## Patentansprüche

1. Sicherungsverwaltungsverfahren, umfassend:
Empfangen (101) eines von einem Benutzer eingegebenen Sicherungsprotokolls, wobei das Sicherungsprotokoll Informationen über eine Sicherungszielmaschine (210) und Informationen über ein Sicherungsmedium (220) umfasst, wobei die Sicherungszielmaschine einer Maschine entspricht, auf der sich Quelldaten von zu sichernden Daten befinden, und das Sicherungsmedium einem dynamisch erweiterbaren Speichersystem entspricht;
Erzeugen (102) eines Sicherungsauftrags basierend auf dem Sicherungsprotokoll; und
Senden (103) des Sicherungsauftrags an einen Sicherungsclient, der auf der Sicherungszielmaschine bereitgestellt ist, um den Sicherungsclient dazu zu veranlassen, den Sicherungsauftrag auszuführen,
wobei das Sicherungsprotokoll ferner einen Sicherungsdatenpfad (230), eine Sicherungsabgleichsregel (240) und einen Sicherungszyklus (250) umfasst, und wobei der Sicherungsdatenpfad (230) einem Ort der Quelldaten auf der Sicherungszielmaschine entspricht, die Sicherungsabgleichsregel (240) einem regulären Ausdruck zum Durchsuchen der Quelldaten entspricht, um die zu sichernden Daten zu erzeugen, und der Sicherungszyklus (250) einer Häufigkeit entspricht, mit der die Sicherungsaufgabe ausgeführt wird, wobei der reguläre Ausdruck ein Muster zum Zeichenkettenabgleich beschreibt.

2. Verfahren nach Anspruch 1, wobei das Erzeugen der Sicherungsaufgabe basierend auf dem Sicherungsprotokoll umfasst:
Durchsuchen von Quelldaten auf dem Sicherungsdatenpfad (230) der Sicherungszielmaschine, um die zu sichernden Daten gemäß der Sicherungsabgleichsregel (240) im Sicherungsprotokoll zu erzeugen, wobei der Sicherungsauftrag die zu sichernden Daten und das Sicherungsmedium umfasst.

3. Verfahren nach Anspruch 1, wobei das Erzeugen des Sicherungsauftrags basierend auf dem Sicherungsprotokoll umfasst:
Erzeugen eines Sicherungsauftrags in jedem Sicherungszyklus (250) entsprechend dem Sicherungszyklus (250) im Sicherungsprotokoll.

4. Verfahren nach Anspruch 2 oder 3, wobei,
in jedem Sicherungsauftrag die Sicherung der zu sichernden Daten von einem Ort am Sicherungsdatenpfad (230) der Sicherungszielmaschine an das dynamisch erweiterbare Speichersystem, das durch die Informationen des Sicherungsmediums (220) angegeben ist, eingeleitet wird.

5. Verfahren nach einem der Ansprüche 1-3, wobei,
das Sicherungsprotokoll durch den Benutzer über eine Webseite eingegeben wird.

6. Verfahren nach einem der Ansprüche 1 bis 3, wobei,
das dynamisch erweiterbare Speichersystem ein verteiltes Speichersystem ist.

7. Verfahren nach Anspruch 1, ferner umfassend:
periodisches Empfangen eines Sicherungsstatus der Sicherungsaufgabe, wobei der Sicherungsstatus von dem Sicherungsclient zurückgesendet wird.

8. Das Verfahren nach Anspruch 7, wobei,
der Sicherungsstatus Sicherungsstart, Sicherung in Bearbeitung oder Sicherungsende umfasst.

9. Sicherungsverwaltungssystem, umfassend:
ein Sicherungsverwaltungsmodul (410), das so konfiguriert ist, dass es ein von einem Benutzer eingegebenes Sicherungsprotokoll verwaltet, wobei das Sicherungsprotokoll Informationen über eine Sicherungszielmaschine (210) und Informationen über ein Sicherungsmedium (220) umfasst, wobei die Sicherungszielmaschine einer Maschine entspricht, auf der sich Quelldaten von zu sichernden Daten befinden, und das Sicherungsmedium einem dynamisch erweiterbaren Speichersystem entspricht; und
ein Sicherungsplanungsmodul (420), das so konfiguriert ist, dass es einen Sicherungsauftrag plant, wobei das Planen des Sicherungsauftrags umfasst:
Erzeugen des Sicherungsauftrags basierend auf dem Sicherungsprotokoll und Senden des Sicherungsauftrags an einen Sicherungsclient, der auf der
Sicherungszielmaschine bereitgestellt wird, um den Sicherungsclient dazu zu veranlassen, den Sicherungsauftrag auszuführen,
wobei das Sicherungsprotokoll ferner einen Sicherungsdatenpfad (230), eine Sicherungsabgleichsregel (240) und einen Sicherungszyklus (250) umfasst, und wobei der Sicherungsdatenpfad (230) einem Ort der Quelldaten auf dem Sicherungszielrechner entspricht, die Sicherungsabgleichsregel (240) einem regulären Ausdruck zum Durchsuchen der Quelldaten entspricht, um die zu sichernden Daten zu erzeugen, und der Sicherungszyklus (250) einer Häufigkeit entspricht, mit der die Sicherungsaufgabe ausgeführt wird, wobei der reguläre Ausdruck ein Muster zum Zeichenkettenabgleich beschreibt.

10. System nach Anspruch 9, wobei das Sicherungsplanungsmodul (420) ferner konfiguriert ist zum:
Durchsuchen von Quelldaten auf dem Sicherungsdatenpfad (230) der Sicherungszielmaschine, um die zu sichernden Daten gemäß der Sicherungsabgleichsregel (240) im Sicherungsprotokoll zu erzeugen, wobei der Sicherungsauftrag die zu sichernden Daten und das Sicherungsmedium umfasst.

11. System nach Anspruch 9, wobei das Sicherungsplanungsmodul (420) ferner konfiguriert ist zum:
Erzeugen eines Sicherungsauftrags in jedem Sicherungszyklus (250) entsprechend dem Sicherungszyklus (250) im Sicherungsprotokoll.

12. Eine Rechenvorrichtung, umfassend:
einen Prozessor; und
einen Speicher, der ein Programm speichert, wobei das Programm Anweisungen umfasst, die, wenn sie von dem Prozessor ausgeführt werden, den Prozessor dazu veranlassen, das Verfahren nach einem der Ansprüche 1-8 durchzuführen.

13. Computerprogrammprodukt, das einen Programmcodeabschnitt zum Ausführen des Verfahrens nach einem der Ansprüche 1 bis 8 umfasst, wenn das Computerprogrammprodukt auf einer oder mehreren Rechenvorrichtungen ausgeführt wird.

## Revendications

1. Procédé de gestion de sauvegarde, comprenant :
recevoir (101) un protocole de sauvegarde entré par un utilisateur, le protocole de sauvegarde comprenant des informations d'une machine cible de sauvegarde (210) et des informations d'un support de sauvegarde (220), la machine cible de sauvegarde correspondant à une machine où sont situées les données source des données à sauvegarder, et le support de sauvegarde correspondant à un système de stockage extensible dynamiquement ;
générer (102) une tâche de sauvegarde sur la base du protocole de sauvegarde ; et
envoyer (103) la tâche de sauvegarde à un client de sauvegarde prévu sur la machine cible de sauvegarde de manière à amener le client de sauvegarde à exécuter la tâche de sauvegarde,
dans lequel le protocole de sauvegarde comprend en outre un chemin de données de sauvegarde (230), une règle de correspondance de sauvegarde (240) et un cycle de sauvegarde (250), et dans lequel le chemin de données de sauvegarde (230) correspond à un emplacement des données source sur la machine cible de sauvegarde, la règle de correspondance de sauvegarde (240) correspond à une expression régulière pour cribler les données source afin de générer les données à sauvegarder, et le cycle de sauvegarde (250) correspond à une fréquence à laquelle est exécutée la tâche de sauvegarde, dans lequel ladite expression régulière décrit un modèle pour la mise en correspondance de chaînes.

2. Procédé selon la revendication 1, dans lequel la génération de la tâche de sauvegarde basée sur le protocole de sauvegarde comprend :
cribler les données source au niveau du chemin de données de sauvegarde (230) de la machine cible de sauvegarde pour générer les données à sauvegarder conformément à la règle de correspondance de sauvegarde (240) dans le protocole de sauvegarde, dans lequel la tâche de sauvegarde comprend les données à sauvegarder et le support de sauvegarde.

3. Procédé selon la revendication 1, dans lequel la génération de la tâche de sauvegarde basée sur le protocole de sauvegarde comprend :
générer une tâche de sauvegarde dans chaque cycle de sauvegarde (250) selon le cycle de sauvegarde (250) dans le protocole de sauvegarde.

4. Procédé selon la revendication 2 ou 3, dans lequel,
dans chaque tâche de sauvegarde, la sauvegarde des données à sauvegarder depuis un emplacement au niveau du chemin de données de sauvegarde (230) de la machine cible de sauvegarde vers le système de stockage extensible dynamiquement indiqué par les informations du support de sauvegarde (220) est initiée.

5. Procédé selon l'une quelconque des revendications 1 à 3, dans lequel,
le protocole de sauvegarde est entré par l'utilisateur via une page Web.

6. Procédé selon l'une quelconque des revendications 1 à 3, dans lequel,
le système de stockage extensible dynamiquement est un système de stockage distribué.

7. Procédé selon la revendication 1, comprenant en outre :
recevoir périodiquement un état de sauvegarde de la tâche de sauvegarde, l'état de sauvegarde étant retransmis par le client de sauvegarde.

8. Procédé selon la revendication 7, dans lequel,
l'état de la sauvegarde comprend le début de la sauvegarde, la sauvegarde en cours ou la fin de la sauvegarde.

9. Système de gestion de sauvegarde, comprenant :
un module de gestion de sauvegarde (410), conçu pour gérer un protocole de sauvegarde entré par un utilisateur, le protocole de sauvegarde comprenant des informations d'une machine cible de sauvegarde (210) et des informations d'un support de sauvegarde (220), la machine cible de sauvegarde correspondant à une machine où se trouvent les données source des données à sauvegarder, et le support de sauvegarde correspondant à un système de stockage extensible dynamiquement ; et
un module de planification de sauvegarde (420), conçu pour planifier une tâche de sauvegarde, dans lequel la planification de la tâche de sauvegarde comprend : la génération de la tâche de sauvegarde sur la base du protocole de sauvegarde, et l'envoi de la tâche de sauvegarde à un client de sauvegarde prévu sur la machine cible de sauvegarde de manière à amener le client de sauvegarde à exécuter la tâche de sauvegarde,
dans lequel le protocole de sauvegarde comprend en outre un chemin de données de sauvegarde (230), une règle de correspondance de sauvegarde (240) et un cycle de sauvegarde (250), et dans lequel le chemin de données de sauvegarde (230) correspond à un emplacement des données source sur la machine cible de sauvegarde, la règle de correspondance de sauvegarde (240) correspond à une expression régulière pour cribler les données source afin de générer les données à sauvegarder, et le cycle de sauvegarde (250) correspond à une fréquence à laquelle est exécutée la tâche de sauvegarde, dans lequel ladite expression régulière décrit un modèle pour la mise en correspondance de chaînes.

10. Système selon la revendication 9, dans lequel le module de planification de sauvegarde (420) est en outre conçu pour :
cribler les données source au niveau du chemin de données de sauvegarde (230) de la machine cible de sauvegarde pour générer les données à sauvegarder conformément à la règle de correspondance de sauvegarde (240) dans le protocole de sauvegarde, dans lequel la tâche de sauvegarde comprend les données à sauvegarder et le support de sauvegarde.

11. Système selon la revendication 9, dans lequel le module de planification de sauvegarde (420) est en outre conçu pour :
générer une tâche de sauvegarde dans chaque cycle de sauvegarde (250) selon le cycle de sauvegarde (250) dans le protocole de sauvegarde.

12. Dispositif informatique, comprenant :
un processeur ; et
une mémoire stockant un programme, le programme comprenant des instructions qui, lorsqu'elles sont exécutées par le processeur, amènent le processeur à exécuter le procédé selon l'une quelconque des revendications 1 à 8.

13. Produit programme informatique, comprenant une partie de code de programme pour la mise en oeuvre du procédé selon l'une quelconque des revendications 1 à 8 lorsque le produit programme informatique est exécuté sur un ou plusieurs dispositifs informatiques.
